# EUROPEAN PATENT APPLICATION

(11) **EP 4 660 873 A1**
(43) Date of publication of application: **10.12.2025**
(21) Application number: 25165454.7
(22) Date of filing: 21.03.2025
(51) Int. Cl.: G06K 19/02, G06K 19/077

(54) **SMART CARD WITH INLAY ENCAPSULATING CARBON FIBER PLUG**

(30) Priority: 05.06.2024 FR 2405908
(71) Applicant: Idemia France, 92400 Courbevoie (FR)
(72) Inventor: DONNELLY, Scott, 92400 Courbevoie (FR); JENKINS, Reid, 92400 Courbevoie (FR); REED, Michaël, 92400 Courbevoie (FR)
(74) Representative: Idemia

(57) **Abstract**

A smart card, having an inlay layer, the inlay layer comprising a card body (100), the card body defining at least one main cavity in the card body, each main cavity of the at least one main cavity having a continuous surface defined by an inner surface of the card body, a carbon fiber plug (110), the carbon fiber plug being housed inside the at least one main cavity, an antenna (120), the antenna being housed inside the at least one main cavity, and a monomer or polymer layer disposed on an outer surface of the inlay layer, the monomer or polymer layer being in contact with an outer surface of the carbon fiber plug.

## Description

The present disclosure relates to the design and structure of a smart cards comprising carbon fiber material.

There is a need for smart cards comprising carbon fiber in luxury banking and other industries where it is advantageous to have a strong, durable and corrosion-resistant card with embedded electronic components for interaction with a card reader.

Carbon fiber has a strong radio frequency blocking, effectively cancelling the contactless communication means of smart card. Carbon fiber is also difficult to cut and is not compatible with the machines used in card manufacturing industry. The carbon fibers particles are sharps and can injury smart card users. Thus, there is a need for carbon fiber into smart card while maintaining the size, the manufacturability and the functionality of the traditional smartcard and the security of the smartcard users.

The foregoing "Background" description is for the purpose of generally presenting the context of the disclosure. Work of the inventors, to the extent it is described in this background section, as well as aspects of the description which may not otherwise qualify as prior art at the time of filing, are neither expressly or impliedly admitted as prior art against the present disclosure.

The present invention aims at overcoming these drawbacks.

The foregoing paragraphs have been provided by way of general introduction and are not intended to limit the scope of the following claims. The described embodiments, together with further advantages, will be best understood by reference to the following detailed description taken in conjunction with the accompanying drawings.

Disclosure proposes in particular an inlay layer of a smart card, comprising a card body, the card body defining at least one main cavity, each main cavity of the at least one main cavity having a continuous surface defined by an inner surface of the card body; a carbon fiber plug, the carbon fiber plug being housed inside the at least one main cavity; and an antenna, the antenna being housed inside the at least one main cavity.

This inlay layer may also comprise the following optional features, taken alone or in combination whenever technically possible:
- the card body is composed of a metal or a polymer;
- the continuous surface of the at least one main cavity and the edges of the card body are distanced of minimum 0.5 mm;
- the continuous surface of the at least one main cavity is discontinuous with an edge of the card body;
- the carbon fiber plug defines an additional cavity in the carbon fiber plug;
- the antenna is fully or partially housed by the additional cavity in the carbon fiber plug;
- the additional cavity in the carbon fiber plug extends through the top and bottom outer surfaces of the carbon fiber plug;
- the at least one main cavity is a first main cavity and a second main cavity, wherein the first main cavity and the second main cavity are disjoints, and wherein the carbon fiber plug is housed inside the first main cavity and the antenna is housed inside the second main cavity.

The disclosure also proposes a smart card, comprising an inlay layer, the inlay layer comprising a card body, the card body defining at least one main cavity in the card body, each main cavity of the at least one main cavity having a continuous surface defined by an inner surface of the card body; a carbon fiber plug, the carbon fiber plug being housed inside the at least one main cavity; and an antenna, the antenna being housed inside the at least one main cavity; and a monomer or polymer layer disposed on an outer surface of the inlay layer, wherein the monomer or polymer layer is in contact with an outer surface of the carbon fiber plug.

The inlay layer of this smart card may be adapted according to each of the possibilities of realization defined previously.

In one embodiment, the present disclosure is related to a method for manufacturing a smart card inlay, the method comprising forming a card body of a metal or a polymer; forming at least one main cavity in the card body, each main cavity of the at least one main cavity having a continuous surface defined by an inner surface of the card body; forming a carbon fiber plug of carbon fiber; depositing the carbon fiber plug in the at least one main cavity in the card body; and depositing an antenna in the at least one main cavity in the card body.

This method for manufacturing a smart card inlay may also comprise the following optional features, taken alone or in combination whenever technically possible:
- the method further comprises forming an additional cavity in the carbon fiber plug, wherein the antenna is partially or fully housed in the additional cavity in the carbon fiber plug;
- the at least one main cavity is a first main cavity and a second main cavity, wherein the first main cavity and the second main cavity are disjoints, and wherein the carbon fiber plug is deposited in the first main cavity and the antenna is deposited in the second main cavity.

The method for manufacturing a smart card inlay may be adapted according to each of the possibilities of realization defined previously for the inlay layer.

A more complete appreciation of the disclosure and many of the attendant advantages thereof will be readily obtained as the same becomes better understood by reference to the following detailed description when considered in connection with the accompany figures, wherein:
Figure 1A is an assembled card body, according to an exemplary embodiment of the present disclosure;
Figure 1B is a carbon fiber plug, according to an exemplary embodiment of the present disclosure;
Figure 2A is an assembled card body, according to an exemplary embodiment of the present disclosure;
Figure 2B is a carbon fiber plug, according to an exemplary embodiment of the present disclosure;
Figure 3A is an assembled card body, according to an exemplary embodiment of the present disclosure;
Figure 3B is a carbon fiber plug, according to an exemplary embodiment of the present disclosure;
Figure 4 is a card body, according to an exemplary embodiment of the present disclosure;
Figure 5 is a sheet of card bodies, according to an exemplary embodiment of the present disclosure;
Figure 6A is an exploded view of a smart card, according to an exemplary embodiment of the present disclosure;
Figure 6B is an isometric exploded view of a smart card, according to an exemplary embodiment of the present disclosure;
Figure 7 is an exploded view of an inlay, according to an exemplary embodiment of the present disclosure;
Figure 8 is a method for assembling an inlay, according to an exemplary embodiment of the present disclosure;
Figure 9 is an exploded view of a sheet of smart cards, according to an exemplary embodiment of the present disclosure; and
Figure 10 is a method for assembling a smart card, according to an exemplary embodiment of the present disclosure.

The terms "a" or "an", as used herein, are defined as one or more than one. The term "plurality", as used herein, is defined as two or more than two. The term "another", as used herein, is defined as at least a second or more. The terms "including" and/or "having", as used herein, are defined as comprising (i.e., open language). Reference throughout this document to "one embodiment", "certain embodiments", "an embodiment", "an implementation", "an example" or similar terms means that a particular feature, structure, or characteristic described in connection with the embodiment is included in at least one embodiment of the present disclosure. Thus, the appearances of such phrases or in various places throughout this specification are not necessarily all referring to the same embodiment. Furthermore, the particular features, structures, or characteristics may be combined in any suitable manner in one or more embodiments without limitation.

Smart cards can be used to digitally provide data to be read by a device. Examples of smart cards can include, but are not limited to, credit/debit cards, identification cards, transportation cards, calling cards, and access cards. The information provided on the card can be stored or accessed by an integrated circuit (IC) embedded in the card. The IC can include a microcontroller or similar processor and memory storage. The IC can be configured for data storage and retrieval, encryption, authentication, and other functions necessary for data transfer and authentication. The device interacting with the card can be a reader equipped to scan or read a smart card and initiate data transfer with the smart card. The scanning or reading can include scanning of a magnetic strip or contact with a chip embedded in the card body. Contactless readers are increasingly popular. Smart cards can include an antenna embedded within the card body to enable contactless data transfer between the integrated circuit of the chip and the reader. The contactless data transfer can be initiated by an inductive coupling, such as in near-field communication (NFC) protocols.

Smart cards can be composed of layers of material to enclose an IC and additional electronic components for data storage and transfer. In addition, smart cards typically include a design or art layer for visual and informational purposes. There are many considerations in the design and manufacture of smart cards. For example, durability, safety, performance, compliance with institutional standards, cost, material usage, ease of manufacturing, appearance, and tactile feel are all factors that affect how smart cards are made. Desired properties of a smart card can depend on the use of the card. For example, cards that are carried and used regularly, such as credit cards, should be durable and resistant to corrosion or breakage while providing the necessary functionality. Cards are also designed and manufactured to comply with standards from the International Organization for Standardization (ISO) regarding the dimensions of the cards and transmission protocols for relevant industries.

In certain industries, there is a need for smart cards comprising carbon fiber while maintaining card functionality and desired characteristics such as durability, machinability, user safeness and standards compliance. For example, credit cards (or similar payment cards) comprising carbon fiber are required in luxury banking for their aesthetic appeal. Credit cards comprising carbon fiber can have different visual and tactile properties that distinguish them from traditional cards; for example, a smart card comprising carbon fiber can be lighter than traditional smart cards. However, the carbon fiber has adverse properties such as Radio frequency shielding and sharp particles. Machining smart cards with carbon fiber that is not typically used in mass manufacturing can also pose challenges. There is therefore a need to design and manufacture smart cards comprising carbon fiber that can be easily manufactured, and that are as efficient for contactless data transfer with readers and as safe for the user handling said smart cards, as the traditional smart cards.

In one embodiment, the present disclosure is directed to a smart card with a carbon fiber plug embedded in the body of the card and a manufacturing method thereof. The card body, including the plug, can form the core of the smart card and can be encapsulated by resin or other substrates. The card body can also include electronic components, including an antenna, an integrated circuit, and/or any other circuitry used for card scanning functionalities. The antenna can be incorporated into the card body along with the carbon fiber plug in a way that does not impede the functionality of the card or expose the electronic components to points of failure. According to some implementations, the carbon fiber plug and the antenna can be incorporated into the card body and allow for contactless reading within a proximity of the card body. A smart card can include one or more circuit components, including, but not limited to, the antenna, a microprocessor, data storage, or other integrated circuit chips. In one embodiment, the antenna can be a first circuit component enabling data transfer between a smart card and a reader. The antenna can be incorporated along with the carbon fiber plug into the card body. Additional circuit components can be embedded into the card body throughout the manufacturing process, including after a card has been assembled and separated from a sheet of cards. The additional circuit components can be embedded in different locations throughout the card body. The carbon fiber plug and the antenna placement do not affect the placement of the additional circuit components in the smart card. Additionally or alternatively, the antenna can include the one or more circuit components, including a microprocessor, data storage, or other integrated circuitry, in a single integrated circuit chip, wherein the chip can be embedded in the card. The description of the antenna throughout this disclosure can refer to a separate antenna component and/or an antenna that is integrated or combined with additional smart card circuitry known to one of ordinary skill in the art. A variety of configurations and geometries of the card body, the carbon fiber plug, and the circuitry can be compatible with the present disclosure and will be disclosed as non-limiting embodiments herein. The card body surrounding the carbon fiber plug can protect the carbon fiber plug from exposure on the smart card edges and thus to handling. According to some embodiments, the card body can be composed of a stainless steel, other machine-able metal, or of a polymer, for example Polyvinyl chloride (commonly named with acronym PVC) or Polycarbonates (commonly named with acronym PC). The carbon fiber plug is composed of carbon fiber, for example the carbon fiber plug is solid and made of pre-laminated carbon fiber impregnated with resin. For illustrative purposes, smart cards incorporating a carbon fiber plug and a card body composed of a metal or a polymer will be described herein. Various families of stainless steel and similar alloys, or of polymer, can be used for the card body. In selecting metals or polymers for the card body, the smart card can achieve the desired weight of the smart card while maintaining or improving machinability. A card body in metal is, by nature, heavier than a card body made of a polymer. Stainless steel or polymer can be use in the card body due to its corrosion resistance, rigidity, low radio frequency permeability, machinability, and industrial availability. Advantageously, the card body can be made of PVC of different colors to get smart cards comprising carbon fiber and colored edges.

Advantageously, the card body can be made of metal to get a stiffer and more robust smart card comprising carbon fiber.

In some embodiments, the carbon fiber plug can be a sheet or a plate of carbon fiber embedded in a cavity, named main cavity, in the card body. Different weaves of carbon fiber can be used to meet design expectations, for examples twill weave, satin weave, or pattern weave. In one embodiment, the carbon fiber plug can be approximately rectangular in shape. The main cavity can be sized to the shape and dimensions of the carbon fiber plug to prevent any movement of the carbon fiber within the main cavity. The carbon fiber plug can be located anywhere within the card body. As previously described, it can be advantageous to fully encapsulate the carbon fiber plug within the card body such that the edges of the carbon fiber plug are not exposed at the edges of the card body. Thus, the main cavity in the card body can be fully contained in the card body and may not be contiguous with the edges of the card body. The edges of a smart card are vulnerable to wear from everyday handling and contact with other surfaces or materials. Surrounding the carbon fiber plug completely with the card body can protect the plug while preventing smart card users to be in contact with carbon fiber particles which can be sharp and lead to injuries. In addition, the card body can still be manufactured in the typical shape and dimensions of a smart card (e.g., a rectangle) as a first step in assembling the card body. Furthermore, embedding the carbon fiber plug in a card body can result in a more durable smart card because the carbon fiber pre-laminated with resin has good mechanical properties in bending but is also brittle when a stress limit is exceeded. The carbon fiber stress limit may be below the mechanical stress limit defined by the standards for the smart cards, for examples in parts 8.1 and 8.14 of standard ISO/IEC 7810 in its fourth edition, 2019-12. The card body made of a metal or a polymer reinforces the structure of the smart card. According to some embodiments, the shape of the carbon fiber plug can be dependent on the shape and positioning of the antenna and other circuitry in the card body, as will be described in further detail herein. According to some embodiments, the main cavity can be a through hole inside the card body.

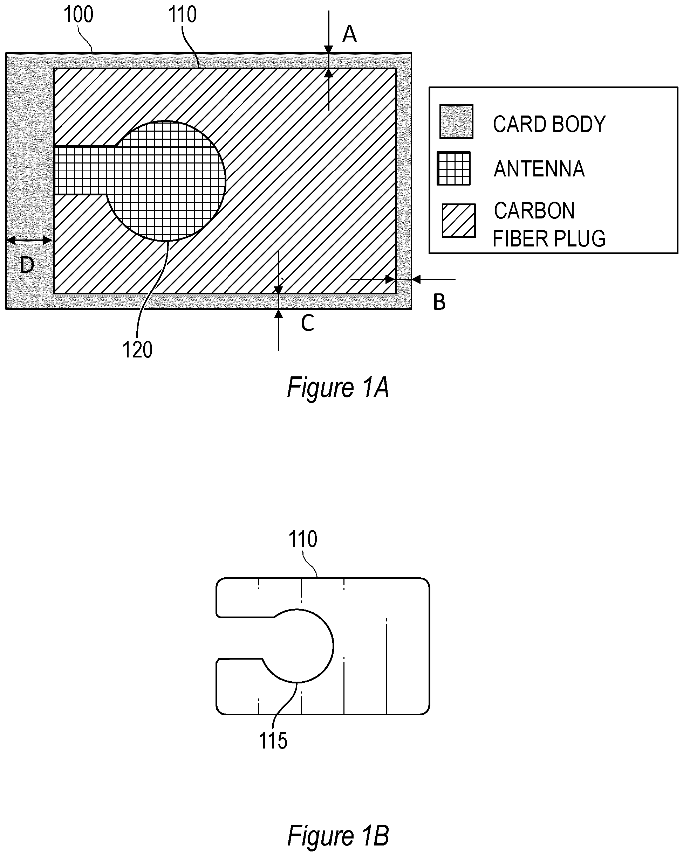

Figure 1A is an illustration of a carbon fiber plug 110 and an antenna 120 embedded in a card body 100, according to one embodiment of the present disclosure. The card body 100 can form the body of the smart card. The card body 100 can be approximately rectangular with rounded corners. Exemplary card and component dimensions are presented herein as non-limiting, illustrative embodiments. In one embodiment, the card body 100 can be approximately 85.928 mm in width and 54.331 mm in height. In one embodiment, the plug 110 is composed of carbon fiber and the card body 100 can be composed of a metal, for example a stainless steel or other machine-able metal, or of a polymer, for example Polyvinyl chloride (commonly named with acronym PVC) or in Polycarbonates (commonly named with acronym PC). In one embodiment, the antenna 120 can include any circuitry used for smart card functionality, including, but not limited to, processing circuitry and memory. A main cavity can be made in the card body 100 to fully contain and encapsulate the carbon fiber plug 110. Thus, the card body defines one main cavity having a continuous surface defined by an inner surface of the card body. In one embodiment, the main cavity can be fully contained in the card body 100 such that the continuous surface of the main cavity is discontinuous with the edges of the card body 100. The carbon fiber plug 110 does not touch the edges of the card body 100 when placed in the main cavity that is fully contained in the card body 100. Advantageously, the continuous surface of the main cavity and the edges of the card body are distanced of minimum 0.5 mm. Distances between the continuous surface of the main cavity and the edges of the card body are referenced A, B, C and D in the figure 1A. In one embodiment, the continuous surface of the main cavity can be continuous with one or more edges of the card body 100 such that the carbon fiber plug 110 is in contact with one or more edges of the card body 100 when placed in the main cavity. In this embodiment, the card body protects the plug while limiting exposure of carbon fiber on at least one edge of the smart card. In some embodiments, the main cavity can include space for the antenna 120. The carbon fiber plug 110 can take up any portion of the area of the card body 100. In one embodiment, the main cavity can be made in a first outer surface (e.g., the top surface) of the card body such the carbon fiber plug 110 can be exposed at the top surface of the card body 100 when the carbon fiber plug 110 is placed in the main cavity. In some embodiments, the main cavity can be a through hole cutout through the first outer surface (e.g., the top surface) and the opposing second outer surface (e.g., the bottom surface) of the card body 100 such that the carbon fiber plug 110 can be exposed at the top surface and the bottom surface of the card body 100 when the carbon fiber plug 110 is placed in the main cavity. In some implementations, the carbon fiber plug design of figure 1A can result in an even distribution of the weight of the carbon fiber across the card.

In one embodiment, the carbon fiber plug 110 can fully encapsulate and contain the antenna 120, as shown in figure 1A. The carbon fiber plug 110 can include an antenna cutout, also named additional cavity, wherein the antenna 120 can fit into the antenna cutout. The antenna 120 can be surrounded by the carbon fiber of the carbon fiber plug 110. An edge of the antenna 120 can be flush with an edge of the carbon fiber plug 110, as illustrated in figure 1A, such that the antenna 120 is contained within the carbon fiber plug 110. In one embodiment, the carbon fiber plug 110 can surround the antenna 120 and extend past the antenna 120. The antenna 120 can be placed in any position and orientation within the carbon fiber 110. According to embodiments, the antenna 120 can be placed in the card body 100 such that the antenna is exposed at the top surface and the bottom surface of the card body. The exposure of the antenna 120 on both sides of the carbon fiber card body can provide improved reception for wireless data transmission.

Figure 1B is an illustration of the carbon fiber plug 110, according to one embodiment of the present disclosure. The carbon fiber plug 110 of figure 1B can be used in the card body design of figure 1A. According to the illustrated example, the carbon fiber plug 110 can be approximately rectangular with rounded comers. According to one example, the carbon fiber plug 110 can be approximately 74.656mm in width and approximately 47.831mm in height. The radius of the rounded edges can be approximately 2.750 mm. Alternative shapes and geometries of the carbon fiber plug 110 are compatible with the present disclosure. In some embodiments, the design of figure 1A can maximize the amount of carbon fiber used in the card as the carbon fiber plug 110 can take up a majority of the surface area of the card body. According to one embodiment, the carbon fiber plug 110 can include an antenna cutout 115, also named additional cavity, for placement of the antenna. The antenna can be fully housed by the additional cavity in the carbon fiber plug. In other words, the carbon fiber plug 110 of figure 1A and figure 1B can fully encapsulate the antenna. Thus, the antenna cutout 115 can be in the shape of the antenna and can be machined to the dimensions of the antenna. For example, the antenna cutout 115 can include a rounded portion with a radius of approximately 12.921mm and a rectangular portion according to the shape of the antenna. The cutout can be a symmetrical shape or can be asymmetrical depending on the shape of the antenna. For example, a first edge of the cutout can extend past an opposite edge. The antenna can be centered in the carbon fiber plug 110 or can be positioned anywhere within the carbon fiber plug 110. According to one embodiment, an edge of the antenna cutout 115 or a portion of the perimeter of the antenna cutout 115 can be aligned with an edge of the carbon fiber plug 110, as illustrated in the example of figure 1B. In one embodiment, the carbon fiber plug 110 can be in contact with the portion of the antenna 120 that is encapsulated by the carbon fiber plug. In one embodiment, the entire antenna can be enclosed within the carbon fiber plug, and the carbon fiber plug can be a closed rectangle. The antenna cutout 115 can be cut through the carbon fiber plug 110 such that the top surface of the antenna and the bottom surface of the antenna are exposed when the antenna is placed in the antenna cutout 115. According to one embodiment, the thickness of the carbon fiber plug can be approximately 0.200mm to 0.840mm in thickness, for example 0.305 mm in thickness. According to one embodiment, the card body can be approximately 0.200mm to 0.840mm in thickness, for example approximately 0.305 mm in thickness. Preferably, the thickness of the card body is the same as the thickness of the carbon fiber plug.

Figure 1A is an illustration of what may also be set as :
- a card body 100, the card body defining one main cavity, the main cavity having a continuous surface defined by an inner surface of the card body,
- a carbon fiber plug 110, the carbon fiber plug being housed inside the main cavity,
- an antenna 120, the antenna being housed inside the main cavity, wherein the carbon fiber plug defines an additional cavity in the carbon fiber plug and wherein the antenna is fully housed by the additional cavity in the carbon fiber plug.

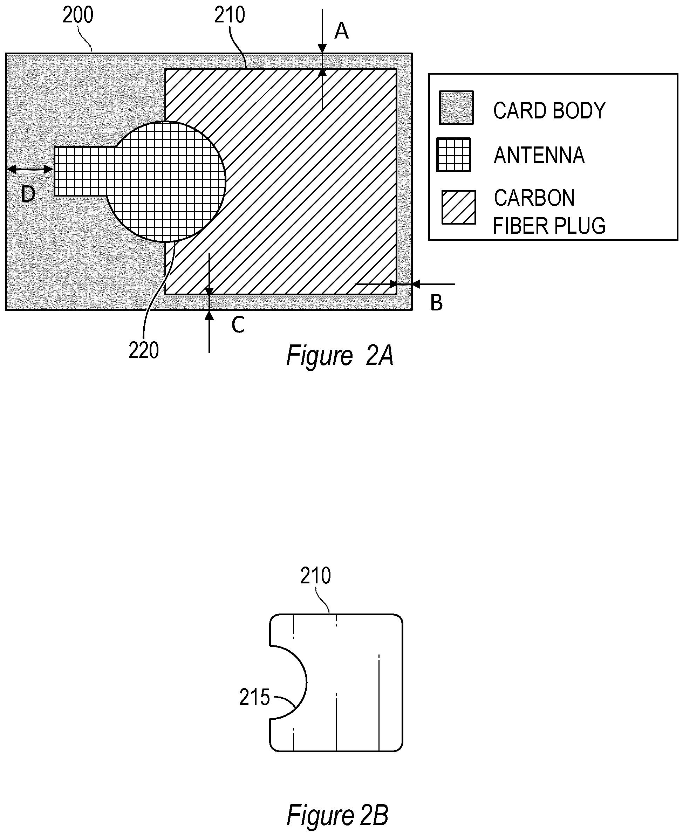

Figure 2A is an illustration of a carbon fiber plug 210 and an antenna 220 embedded in a card body 200 according to one embodiment of the present disclosure. The card body 200 can form the body of the smart card. The card body 200 can be approximately rectangular with rounded corners. Exemplary card and component dimensions are presented herein as non-limiting, illustrative embodiments. In one embodiment, the card body 200 can be approximately 85.928 mm in width and 54.331 mm in height. In one embodiment, the carbon fiber plug 210 is composed of carbon fiber plug and the card body 200 can be composed of a metal, for example a stainless steel or other machine-able metal, or of a polymer, for example Polyvinyl chloride (commonly named with acronym PVC) or Polycarbonates (commonly named with acronym PC). In one embodiment, the antenna 220 can include any circuitry used for smart card functionality, including, but not limited to, processing circuitry and memory. A main cavity can be made in the card body 200 to fully contain and encapsulate the carbon fiber plug 210. Thus, the card body defines one main cavity having a continuous surface defined by an inner surface of the card body. In one embodiment, the main cavity can be fully contained in the card body 200 such that the continuous surface of the main cavity is discontinuous with the edges of the card body 200. The carbon fiber plug 210 does not touch the edges of the card body 200 when placed in the main cavity that is fully contained in the card body 200. Advantageously, the continuous surface of the main cavity and the edges of the card body are distanced of minimum 0.5 mm. Distances between the continuous surface of the main cavity and the edges of the card body are referenced A, B, C and D in the figure 2A. In one embodiment, the continuous surface of the main cavity can be continuous with one or more edges of the card body 200 such that the carbon fiber plug 210 is in contact with one or more edges of the card body 200 when placed in the main cavity. In this embodiment, the card body protects the plug while limiting exposure of carbon fiber on at least one edge of the smart card. In some embodiments, the main cavity can include space for the antenna 120. The carbon fiber plug 210 can take up any portion of the area of the card body 200. In one embodiment, the main cavity can be made in a first outer surface (e.g., the top surface) of the card body such that the carbon fiber plug 210 can be exposed at the top surface of the card body 200 when the carbon fiber plug 210 is placed in the main cavity. In some embodiments, the main cavity can be a cutout through the first surface (e.g., the top surface) of the card body 200 and the opposing second outer surface (e.g., the bottom surface) of the card body 200 such that the carbon fiber plug 210 can be exposed at the top surface and the bottom surface of the card body when the carbon fiber plug is placed in the main cavity. According to embodiments, the antenna 220 can be placed in the card body 200 such that the antenna is exposed at the top surface and the bottom surface of the card body. The exposure of the antenna 220 on both sides of the card body can provide improved reception for wireless data transmission.

In one embodiment, the carbon fiber plug 210 can partially encapsulate the antenna 220, as illustrated in figure 2A. The carbon fiber plug 210 can include an antenna cutout, also named additional cavity, wherein a portion of the antenna 220 can fit into the cutout of the carbon fiber plug 210. A portion of the antenna 220 can be surrounded by the carbon fiber plug 210. In one embodiment, the carbon fiber plug 210 can be in contact with the portion of the antenna 220 that is partially encapsulated by the carbon fiber plug. The remaining portion of the antenna can extend past the carbon fiber plug 210 and be embedded directly in the card body 200. The antenna 220 is partially constrained by the carbon fiber plug 210 and partially constrained by the card body 200. The antenna 220 is partially housed by the additional cavity in the carbon fiber plug. Advantageously, the partial encapsulation of the antenna 220 can maximize the carbon fiber plug material for the given area while ensuring that each component is fully constrained.

Figure 2B is an illustration of the carbon fiber plug 210, according to one embodiment of the present disclosure. The carbon fiber plug 210 of figure 2B can be used in the card body design of fig-ure 2A. According to the illustrated example, the carbon fiber plug 210 can be approximately rectangular with rounded corners. The radius of the rounded edges can be approximately 2.750 mm. In one embodiment, the carbon fiber plug 210 can be approximately 45.281 mm in width and approximately 47.831 mm in height. Alternative shapes and geometries of the carbon fiber plug 210 are compatible with the present disclosure. According to one embodiment, the carbon fiber plug 210 can include an antenna cutout 215, also named additional cavity, for placement of the antenna. The antenna can be partially housed by the additional cavity in the carbon fiber plug. In other words, the carbon fiber plug 210 of figure 2A and figure 2B can partially encapsulate the antenna. The antenna cutout 215 can be in the shape of a portion of the antenna. For example, the antenna cutout 215 can be a rounded cutout to fit around a rounded portion of the antenna, as illustrated in figure 2B. In one embodiment, the radius of the curve of the cutout 215 can be approximately 12.921 mm. The cutout 215 can be approximately symmetrical or can be asymmetrical. For example, a first edge of the cutout 215 can extend past an opposing edge. In one embodiment, the geometry of the antenna cutout 215 can be designed to minimize manufacturing time. For example, the antenna cutout 215 can be shaped for easy placement of the antenna within the cutout. The antenna cutout 215 can be centered along any dimension of the carbon fiber plug 210 or can be positioned anywhere within the carbon fiber plug 210. The antenna cutout 215 can be cut through the carbon fiber plug 210 such that the antenna is exposed at the top surface and the bottom surface of the carbon fiber plug when the antenna is placed in the antenna cutout 215. According to one embodiment, the carbon fiber plug can be approximately 0.200mm to 0.840mm in thickness, for example approximately 0.305 mm in thickness. According to one embodiment, the card body can be approximately 0.200mm to 0.840mm in thickness, for example 0.305 mm in thickness. Preferably, the thickness of the card body is the same as the thickness of the carbon fiber plug.

Figure 2A is an illustration of what may also be set as :
- a card body 200, the card body defining one main cavity, the main cavity having a continuous surface defined by an inner surface of the card body,
- a carbon fiber plug 210, the carbon fiber plug being housed inside the main cavity,
- an antenna 220, the antenna being housed inside the main cavity, wherein the carbon fiber plug defines an additional cavity in the carbon fiber plug and wherein the antenna is partially housed by the additional cavity in the carbon fiber plug.

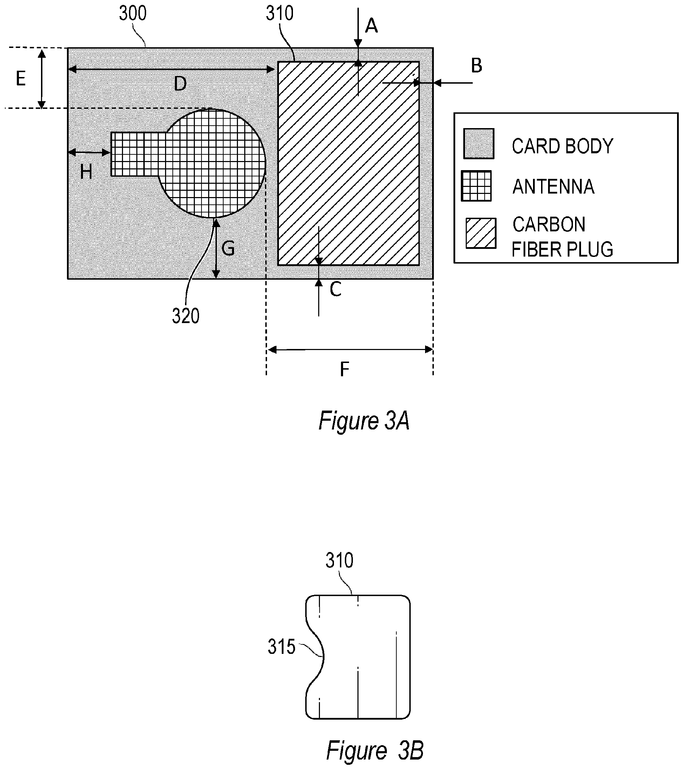

Figure 3A is an illustration of a carbon fiber plug 310 and an antenna 320 embedded in a card body 300 according to one embodiment of the present disclosure. The card body 300 can form the body of the smart card. The card body 300 can be approximately rectangular with rounded corners. Exemplary card and component dimensions are presented herein as non-limiting, illustrative embodiments. In one embodiment, the card body 300 can be approximately 85.928 mm in width and 54.331 mm in height. In one embodiment, the carbon fiber plug 310 is composed of carbon fiber and the card body 300 can be composed of a metal, for example a stainless steel or other machine-able metal, or of a polymer, for example Polyvinyl chloride (commonly named with acronym PVC) or Polycarbonates (commonly named with acronym PC). In one embodiment, the antenna 320 can include any circuitry used for smart card functionality, including, but not limited to, processing circuitry and memory. A main cavity can be made in the card body 300 to fully contain and encapsulate the carbon fiber plug 310. Thus, the card body defines one main cavity having a continuous surface defined by an inner surface of the card body. In one embodiment, the main cavity can be fully contained in the card body 300 such that the continuous surface of the main cavity is discontinuous with the edges of the card body 300. The carbon fiber plug 310 does not touch the edges of the card body 300 when placed in the main cavity that is fully contained in the card body 300. Advantageously, the continuous surface of the main cavity and the edges of the card body is distanced of minimum 0.5 mm. In one embodiment, the continuous surface of the main cavity can be continuous with one or more edges of the card body 300 such that the carbon fiber plug 310 is in contact with one or more edges of the card body 300 when placed in the main cavity. In this embodiment, the card body protects the plug while limiting exposure of carbon fiber on at least one edge of the smart card. In some embodiments, the main cavity can include space for the antenna 320. The carbon fiber plug 310 can take up any portion of the area of the card body 300. In one embodiment, the main cavity can be made in a first outer surface (e.g., the top surface) of the card body such the carbon fiber plug 310 can be exposed at the top surface of the card body 300 when the carbon fiber plug 310 is placed in the main cavity. In some embodiments, the main cavity can be a cutout through the first surface (e.g., the top surface) of the card body 300 and the opposing second outer surface (e.g., the bottom surface) of the card body 300 such that the carbon fiber plug can be exposed at the top surface and the bottom surface of the card body 300 when the carbon fiber plug is placed in the main cavity. In one embodiment, the antenna 320 can be placed in the card body 300 such that the antenna is exposed at the top surface and the bottom surface of the card body. The exposure of the antenna 320 on both sides of the card body can provide improved reception for wireless data transmission.

In one embodiment, the carbon fiber plug 310 can be separate from the antenna 320 in the card body 300, as illustrated in figure 3A. The card body 300 can include a first main cavity for the carbon fiber plug 310 and a second main cavity for the antenna 320. The card body defines a first main cavity and a second main cavity, each main cavity of the first main cavity and the second main cavity having a continuous surface defined by an inner surface of the card body. The first main cavity and the second main cavity are disjoints. The carbon fiber plug 310 and the antenna 320 can be positioned in the card body 300 such that the two components are not in contact with each other. The carbon fiber plug 310 and the antenna 320 can each be independently constrained by the card body 300. The size and geometry of the carbon fiber plug 310 can depend on the size and geometry of the antenna 320. In some implementations, the separation between the carbon fiber plug 310 and the antenna 320 can result in the most efficient use of carbon fiber in the carbon fiber plug 310 because the carbon fiber plug 310 does not include any material cutouts. The more uniform shape of the carbon fiber plug 310 in the exemplary design of figure 3A can reduce manufacturing time and costs. Advantageously, the edges of the card body and the continuous surface of the first main cavity and of the second cavity are distanced of minimum 0.5 mm. Distances between the continuous surface of the first main cavity and the edges of the card body are referenced A, B, C and D in the figure 3A. Distances between the continuous surface of the second main cavity and the edges of the card body are referenced E, F, G and H in the figure 3A.

Figure 3B is an illustration of the carbon fiber plug 310, according to one embodiment of the present disclosure. The carbon fiber plug 310 of figure 3B can be used in the card body design of fig-ure 3A. According to the illustrated example, the carbon fiber plug 310 can be approximately rectangular with rounded corners. The radius of the rounded edges can be approximately 2.750 mm. In one embodiment, the carbon fiber plug 310 can be approximately 34 mm in width and approximately 47.831 mm in height. Alternative shapes and geometries of the carbon fiber plug 310 are compatible with the present disclosure. According to one embodiment, the carbon fiber plug 310 may not include an antenna cutout because the carbon fiber plug 310 can be positioned separate from the antenna. In other words, in this embodiment the carbon fiber plug 310 doesn't define any additional cavity. According to one embodiment, the carbon fiber plug can include a curvature 315 to fit around the antenna. The radius of the curvature 315 can be, for example, approximately 15.671 mm. The curvature 315 can enable the carbon fiber plug and the antenna to be positioned in close proximity without overlap or contact between the carbon fiber plug and the antenna. According to one embodiment, the carbon fiber plug can be approximately 0.200mm to 0.840mm in thickness, for example approximately 0.305mm in thickness. According to one embodiment, the card body can be approximately 0.200mm to 0.840mm in thickness, for example approximately 0.305 mm in thickness. Preferably, the thickness of the card body is the same as the thickness of the carbon fiber plug.

Figure 3A is an illustration of what may also be set as :
- a card body 300, the card body defining at least one main cavity, each main cavity of the at least one main cavity having a continuous surface defined by an inner surface of the card body,
- a carbon fiber plug 310, the carbon fiber plug being housed inside the at least one main cavity,
- an antenna 320, the antenna being housed inside the at least one main cavity, wherein the at least one main cavity is a first main cavity and a second main cavity, wherein the first main cavity and the second main cavity are disjoints, and wherein the carbon fiber plug 320 is housed inside the first main cavity and the antenna 320 is housed inside the second main cavity.

According to one embodiment, the antenna can be a perimeter antenna placed in proximity to one or more edges of the card body. For example, the antenna can be a length of circuitry positioned along any length of the perimeter of the card body. In some embodiments, the perimeter antenna can be placed near the edges of the card body but not directly at the edges of the card body. The card body (e.g., the stainless steel card body) can still compose the edges of the smart card to ensure the durability of the smart card. The perimeter antenna can enable different configurations and proximities for reading of a smart card. In one embodiment, the perimeter antenna can surround the carbon fiber plug. For example, the carbon fiber plug can be a rectangular plug. The carbon fiber plug can be placed in a main cavity in the card body and the perimeter antenna can be positioned around the carbon fiber plug. In one embodiment, the perimeter antenna can be in contact with the carbon fiber plug and can form a border of the carbon fiber plug. In one embodiment, there can be separation between the carbon fiber plug and the perimeter antenna. In one embodiment, the carbon fiber plug can include an antenna cutout for placement of the perimeter antenna. For example, the carbon fiber plug can include an antenna cutout in the shape of a rectangular outline. The perimeter antenna can be fully or partially housed by the antenna cutout, also named additional cavity, in the carbon fiber plug. In other words, the perimeter antenna can be fully or partially encapsulated by the carbon fiber plug.

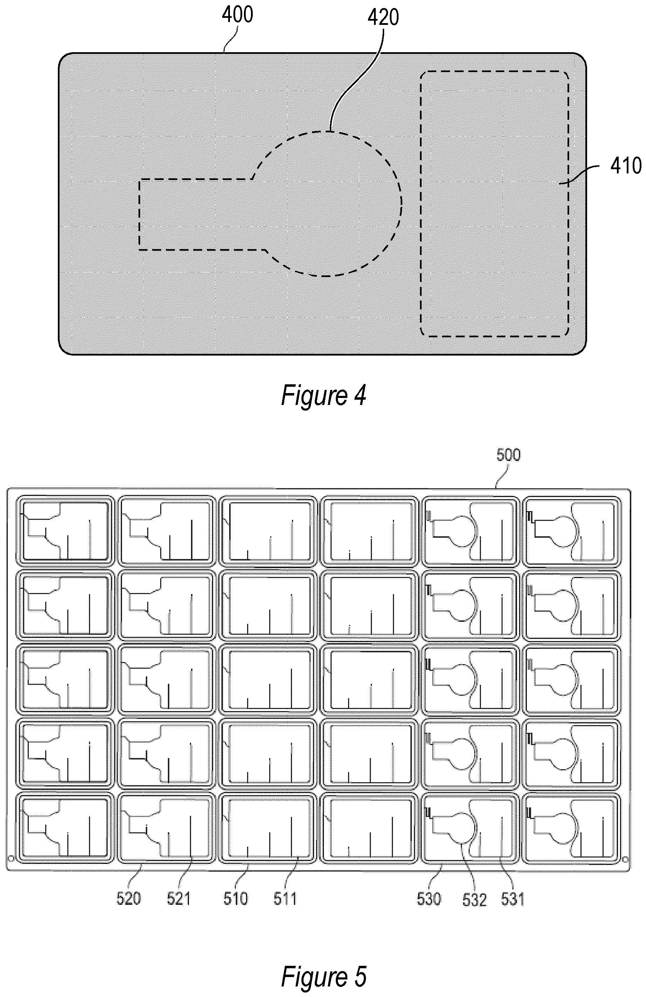

Advantageously, any of the cards described herein can be manufactured with a variety of antenna and chip designs and standards. The illustrative examples provided in the present disclosure make clear a number of positions and relationships between the card body, the carbon fiber plug, and the antenna. These positions can be implemented with a variety of card body shapes, carbon fiber plug shapes, and antenna shapes and sizes. For example, a circular carbon fiber plug can fully encapsulate or partially encapsulate an antenna. According to one embodiment, any of the cards disclosed herein can be compatible with more than one antenna or circuit module. For example, a card body and/or a carbon fiber plug can include more than one cutout for more than one antenna. In one embodiment, a card body can include more than one carbon fiber plug. For example, an antenna can be positioned in the center of the card body. A first carbon fiber plug can be positioned on a first side of the antenna and a second carbon fiber plug can be positioned on a second side of the antenna. Figure 4 is an illustration of a card body 400 with a first main cavity 410 for a carbon fiber plug and a second main cavity 420 for an antenna, according to one embodiment of the present disclosure. The first main cavity and the second main cavity are disjoints. In the exemplary illustration, the carbon fiber plug and the antenna can be positioned in the card body 400 with a separation between the two components, as in figure 3A and figure 3B. In some embodiments, the first main cavity 410 and the second main cavity 420 can be combined into a single main cavity in the card body, as when the carbon fiber plug fully encapsulates or partially encapsulates the antenna. According to one embodiment, the card body 400 can be cut into a foil or sheet, named sheet of bodies in the rest of the description, e.g., a metal foil such as a stainless steel foil, or a polymer foil such as a PVC or PC foil. For example, a number of card bodies can be cut into a foil in one lasercutting, chemical etching, punching or computerized numerical control machining process. The foil can include, for example, 48 card bodies and can be further processed as a single sheet before the individual card bodies are separated from the foil. In one embodiment, at least one main cavity can be chemically etched into the card body 400. Chemical etching can involve using a light-sensitive photoresist to transfer a pattern onto the card body 400. Chemical etching can be used to create precise cavities in a highly repeatable manner without placing mechanical stress on the card body 400. The depth of each main cavity can be modulated by the chemical etching process. In an embodiment, the thickness of the carbon fiber plug can be approximately the same as the thickness of the card body. The carbon fiber plug can sit flush against the top surface and bottom surface of the card body when the carbon fiber plug is placed in the first main cavity 410. In one embodiment, the thickness of the antenna can be approximately the same as the thickness of the card body.

Figure 5 is an illustration of a foil or sheet 500 with multiple card bodies, according to one embodiment of the present disclosure. In one embodiment, the sheet 500 of bodies can be a metal sheet such as a stainless steel sheet or a polymer sheet such as a PVC or PC sheet, as has been discussed herein. The sheet 500 of bodies can be cut and etched to create multiple card bodies, e.g., 30 card bodies as illustrated in figure 5. As an exemplary embodiment, the sheet 500 of bodies can be approximately 590.5 mm in width and 191.1 mm in height. In one embodiment, each card body can be surrounded by a border. The border can be a separation between card bodies to facilitate assembly and can form a boundary for singulation or separation of the card bodies from the sheet after assembly. In one embodiment, the sheet 500 of bodies can be used to create more than one card body design. For example, the sheet 500 of bodies can include card bodies 510 for a carbon fiber plug fully encapsulating an antenna, card bodies 520 for a carbon fiber plug partially encapsulating an antenna, and card bodies 530 for a carbon fiber plug positioned separately from an antenna. The main cavity or cavities for each of the card body designs can be chemically etched into each of the card bodies 510, 520, 530. For example, a single main cavity 511 in the shape of a carbon fiber plug can be chemically etched into each card body 510. The single main cavity 511 can contain a carbon fiber plug fully encapsulating an antenna. In one exemplary design, a main cavity 521 can be chemically etched into each card body 520. The main cavity 521 can contain a carbon fiber plug and an antenna, wherein the carbon fiber plug is partially encapsulating an antenna. In one exemplary design, a first main cavity 531 and a second main cavity 532 can be chemically etched into each card body 530. The first main cavity 531 can contain a carbon fiber plug, and the second main cavity 532 can contain an antenna. The first main cavity 531 and the second main cavity 532 can be chemically etched with a separation between the first main cavity 531 and the second main cavity 532, the first main cavity and the second main cavity being thus disjoints. The separation between the first main cavity 531 and the second main cavity 532 can be contrasted with the partial encapsulation design of card body 520, in which the carbon fiber plug and the antenna can fit into a single main cavity 521. Exemplary dimensions of the sheet 500 of bodies and each of the card bodies 510, 520, 530 are shown in figure 5. Each of the card bodies 510, 520, 530 can be rectangular with rounded edges. In one embodiment, the card bodies can be uniformly spaced across the sheet 500 of bodies with the same separation between each card body. Each card body can have the same dimensions or at least one dimension (e.g., a height, a width) in common. A sheet 500 of bodies can be used for a single card body design or more than one card body design.

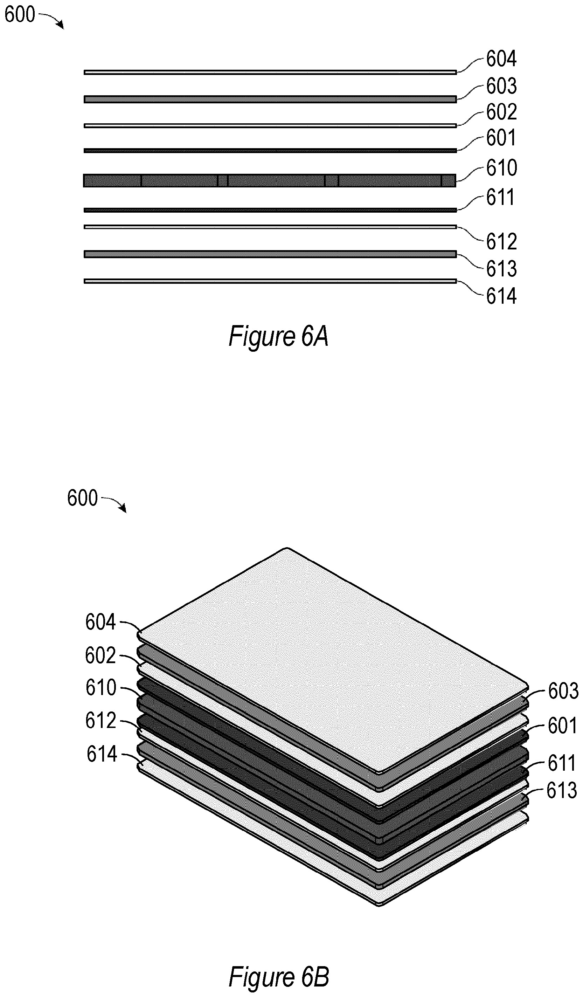

Figure 6A is a lateral exploded view of a fully assembled smart card 600 according to an exemplary embodiment of the present disclosure. The smart card 600 can include the card body 610. The card body 610 can be metal body such as a stainless steel body or a polymer body such as a PVC or PC body. The card body 610 can form the core of the smart card 600. In one embodiment, the smart card 600 can include at least one binder layer 601 and at least one polymer layer 602 on top of the at least one binder layer 601 on top of the card body 610. In one embodiment, the smart card 600 can include at least one binder layer 611 and at least one polymer layer 612 on the bottom of the smart card. In one embodiment, the binder layers 601, 611 can be resin layers. The resin can be monomer or polymer. The resin can be a curable resin, including, but not limited to, ester group resins, acetal resins, casting resins, impregnated resins, unsaturated resins, saturated resins, urethane acrylate, silicone acrylate, epoxy acrylate, methacrylate, acrylate, or urethane. In one embodiment, the binder layer can be an adhesive layer. In one embodiment, the polymer layers 602, 612 can be polyvinyl chloride (PVC) or an epoxy-based compound. In one embodiment, the binder layers and polymer layers can be totally or partially transparent. According to one embodiment, the smart card 600 can further include a top art layer 603 and a top overlay layer 604 on top of the polymer layer 602. The top art layer 603 and/or the top overlay layer 604 can be totally or partially transparent to reveal the inner carbon fiber components. The top art layer 603 can include, in some examples, designs such as a logo or identifying information related to the card issuer or cardholder. In one embodiment, the smart card 600 can include a bottom art layer 613 and a bottom overlay layer 614 over the polymer layer 612 on the bottom of the smart card. Each layer can be a rectangular layer with rounded edges of approximately the same dimensions as the card body 610. In one embodiment, the layers of the smart card 600 can be disposed such that the sides of the card body 610 remain exposed. For example, the layers may not wrap around the sides of the card body 610. The exposed edges of the card body 610 maintain the durability of the smart card and prevent smart card users to be in contact with carbon fiber particles. The exposed edges of the card body 610 can be colored when the card body is made of PVC. The exposed edges of the card body 610 are stiffer, robuster and deliver a metal feel to the user when the card body is made of metal.

According to an exemplary embodiment, the top overlay layer 604 and the top art layer 603 can be plastic layers, including, but not limited to, polyvinyl chloride (PVC) or polyvinyl chloride acetate (PVCA). The top overlay layer 604 can be approximately 45µm to approximately 60µm in thickness. The top art layer 603 can be approximately 127µm in thickness. In one embodiment, the top overlay layer 604 and the top art layer 603 can be collated before being disposed onto the card. Similarly, the bottom overlay layer 614 and the bottom art layer 613 can be collated before being disposed. In one embodiment, the top polymer layer 602 and the top binder layer 601 can be approximately 50µm in thickness in combination. In one embodiment, the card body 610 can be approximately 330µm in thickness. The card body 610 can include the carbon fiber plug and the antenna as described herein. The bottom binder layer 611 and the bottom polymer layer 612 can be approximately 50µm to approximately 75µm in thickness in combination. The bottom art layer 613 can be a PVC layer and can be approximately 127µm in thickness. The bottom overlay layer 614 can be a PVC layer and can be approximately 45µm to 60µm in thickness. In one embodiment, the bottom overlay layer 614 can include a magnetic stripe for swiping the smart card through a reader device such as a payment terminal. It can be appreciated that the dimensions listed herein are presented as exemplary embodiments, and that alternative layer geometries and thicknesses are compatible with the present disclosure. A top overlay layer 604 and a bottom overlay layer 614 made of PVC are advantageous to protect the top art layer 603 and the bottom art layer 613 while easing the hot stamping of any hologram and signature panel, and facilitating card personalization with existing equipment, for example laser and thermal transfer machines.

Figure 6B is an isometric exploded view of a fully assembled smart card 600 according to an exemplary embodiment of the present disclosure. The smart card 600 can include the top overlay layer 604, the top art layer 603, the top polymer layer 602, and the top binder layer 601 as a series of layers stacked on the top surface of the card body 610. The smart card 600 can further include the bottom binder layer 611, the bottom polymer layer 612, the bottom art layer 613, and the bottom overlay layer 614 as a series of layers stacked beneath the bottom surface of the card body 610. According to one embodiment, the card body 610 can be the thickest layer of the smart card 600. In one embodiment, the art layers and the overlay layers can differ for visual or aesthetic purposes. In one embodiment, the art layers and/or the overlay layers can include etched or raised portions. In one embodiment, at least one of the art layers can include a window, wherein the card body can be visible through the window in the art layer. The window can be, for example, a cutout in the art and/or overlay layers. The cutout can be covered with a transparent material such as a transparent plastic or resin. In one embodiment, the window can provide a view of the card body and/or the carbon fiber plug. The visibility of the card body and/or the carbon fiber can provide an aesthetic appeal. The visibility of the card body and/or the carbon fiber can also enable a person handling the card to see whether there is any breakage, or other changes to the inner components.

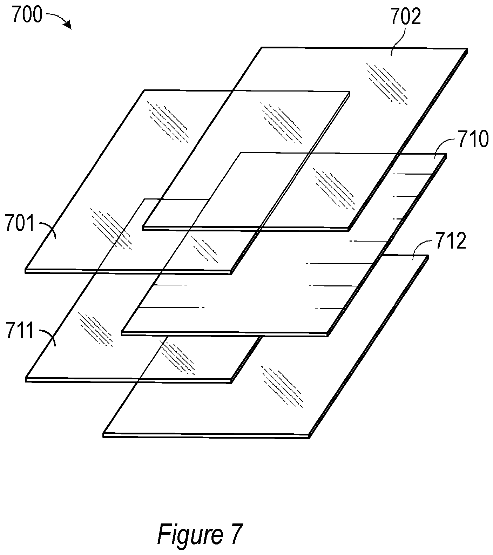

In one embodiment, the bottom polymer layer, the bottom binder layer, the card body, the top binder layer, and the top polymer layer can be formed as an inlay in the smart card. The inlay can be assembled and placed as a single insert. Figure 7 is an exploded view of an inlay 700 for a single smart card according to an exemplary embodiment of the present disclosure. The inlay 700 can include the bottom polymer layer 712, the bottom binder layer 711, the card body 710 including the carbon fiber plug and the antenna, the top binder layer 701, and the top polymer layer 702. According to one embodiment, each of the monomer or polymer layers can be approximately 25µm in thickness. In one embodiment, the monomer or polymer layers can differ in thickness. According to one embodiment, each of the binder layers can be approximately 25µm in thickness. In one embodiment, the binder layers can differ in thickness.

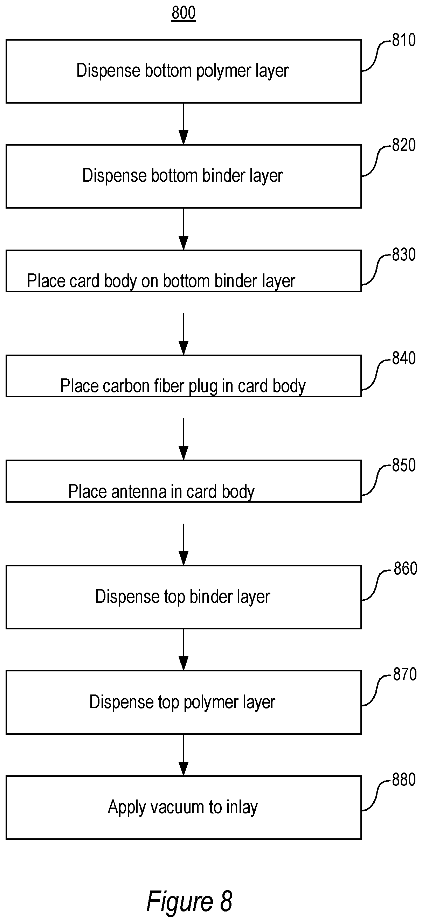

Figure 8 is a method 800 for assembly of an inlay, according to an exemplary embodiment of the present disclosure. The bottom polymer can be provided in step 810. The bottom binder layer can be dispensed on top of the bottom polymer layer in step 820. The card body can then be placed on top of the bottom binder layer in step 830. The card body can include at least one main cavity. In one embodiment, the at least one main cavity can be chemically etched in the card body. The carbon fiber plug can be placed in the at least one main cavity in the card body in step 840. The carbon fiber plug can be cut from a carbon fiber sheet or foil using a laser, a water jet or a computerized numerical control machining. For example, a carbon fiber plug can be cut from a sheet of carbon fiber foil with lasers or with mechanical cutting tools. The antenna can be placed in the at least one main cavity in the card body in step 850. In one embodiment, the carbon fiber plug and the antenna can be placed in the same main cavity. The carbon fiber plug can fully encapsulate or partially encapsulate the antenna, as has been described herein. In one embodiment, the carbon fiber plug can be placed into a first main cavity in the card body and the antenna can be placed into a second main cavity in the card body. In one embodiment, the carbon fiber plug and the antenna can be placed in the at least one main cavity by hand. In one embodiment, the carbon fiber plug and the antenna can be placed in the at least one main cavity by a pick and place machine. According to one embodiment, the placement of the carbon fiber plug and the antenna can be inspected and adjusted before additional layers are dispensed on top of the card body. The top binder layer can be dispensed on top of the card body in step 860 after the carbon fiber plug and antenna have been placed in the card body. The top polymer layer can be dispensed on top of the top binder layer in step 870.

In one embodiment, the inlay can be finalized by placing the assembled inlay layers into a vacuum chamber and applying a vacuum in step 880. In the vacuum chamber, a plate (e.g., an acrylic or stainless steel plate) can be placed on top of the layers to apply weight and hold the layers in place while the vacuum is applied to the chamber. As an exemplary method, the plate can be approximately 400mm by 600mm and can include 9-30 embedded, 25mm diameter, 3mm thick N45 magnets to hold the card body in place when the card body is made of metal. As another exemplary method, when the card body is made of polymer, the plate is held down with a flat piece of plastic to keep card body in place during the vacuum. The vacuum can embed all materials between the top polymer layer and the bottom polymer layer to reduce errors. According to one embodiment, the vacuum can be applied for approximately 60 to 90 seconds. After the vacuum has embedded all of the materials and layers, the inlay can be handled easily without the individual layers or components shifting. It can be appreciated that the inlays can be assembled as a sheet of inlays, wherein the sheet of inlays can include more than one inlay (e.g., 30 inlays). Each layer in the inlay can be deposited as a sheet. The sheet of inlays can be embedded in the vacuum chamber. In one embodiment, each inlay can be cut into the sheet using a laser cutting or similar process. According to one embodiment, the layers of the inlay can be individually cut, e.g., using laser cutting, prior to or during assembly. The inlays or cards can be separated from the sheet in a singulation process after assembly of the inlay or the entire card. Certain card embodiments described herein may provide advantages for assembly. For example, placing the carbon fiber plug and the antenna in a single main cavity can reduce operator placement time compared to placing components in separate main cavities.

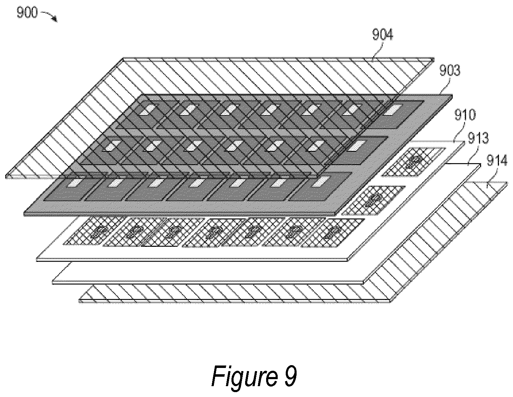

Figure 9 is an exploded view of a sheet of smart cards 900 according to an exemplary embodiment of the present disclosure. The smart cards can be assembled in layered sheets. In one example, a sheet can include 30 smart cards. In one embodiment, the polymer layers, binder layers, and card bodies can be assembled as a sheet of inlays 910, as described herein with reference to figure 7 and figure 8. The remaining layers, including the overlay layers and the art layers, can be disposed in sheets surrounding the sheet of inlays. According to one embodiment, the bottom overlay sheet 914 can be approximately 45µm in thickness. The bottom art sheet 913 can be a printed core sheet and can be approximately 127µm in thickness. As an example, the art sheet can be printed using a silk-screen or similar process. In one embodiment, magnetic strips can be printed on the bottom art sheet 913 using magnetic inks. The inlay sheet 910 can be disposed on top of the bottom art sheet 913.

The inlay sheet 910 can include a sheet of bodies surrounded by a top polymer sheet and a top binder sheet and a bottom binder sheet and a bottom polymer sheet. Each body of the sheet of bodies includes a carbon fiber plug and an antenna. The inlay sheet 910 can be approximately 450µm in thickness. The top art sheet 903 can be a printed core disposed on top of the inlay sheet 910 and can be approximately 127µm in thickness. The top art sheet 903 can be printed with the same design as the bottom art sheet 913 or a different design. The top overlay sheet 904 can then be disposed on top of the top art sheet 903 and can be approximately 45µm in thickness. In one embodiment, the overlay sheet can be transparent. A top overlay sheet 904 and a bottom overlay layer 914 made of PVC are advantageous to protect the top art sheet 903 and the bottom art sheet 913 while easing the hot stamping of any hologram and signature panel, and facilitating personalization of cards with existing equipment, for example laser and thermal transfer machines.

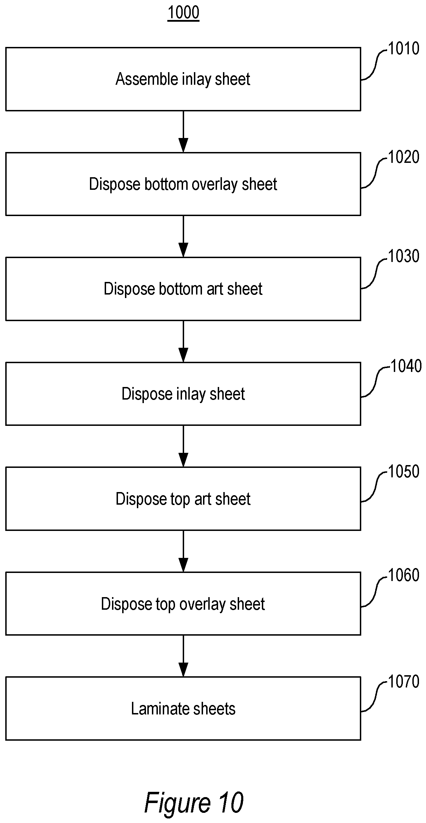

Figure 10 is a method 1000 of assembling a sheet of smart cards with carbon fiber plugs, according to an exemplary embodiment of the present disclosure. A sheet of inlays, for example sheet of inlays 910 illustrated in figure 9, can first be assembled in step 1010. The sheet of inlays can be assembled according to the methods described herein with reference to figure 8. The bottom overlay sheet can be disposed in step 1020. The bottom art sheet can be printed and can be disposed on top of the bottom overlay sheet in step 1030. The sheet of inlays can be disposed on top of the bottom art sheet in step 1040. The top art sheet can be printed and can be disposed on top of the sheet of inlays in step 1050. The top overlay sheet can be disposed on top of the top art sheet in step 1060. In one embodiment, plastic welding can secure the layers in place while the sheet of cards is being assembled.

Plastic sheets can hold the layers together temporarily while the sheets are being disposed in layers.

In one embodiment, heat welding can secure the layers in place during assembly. Heat welding can reduce the risk of contaminating the binder layers.

According to some embodiments, the sheet of smart cards can be laminated in step 1070 after the sheets are collated. The lamination can hold the layers together and can protect the finish of the card and increase the strength of the card. Advantageously, the collation of the overlay, art, and inlay layers and the lamination of the sheet of cards are not affected by the placement of the carbon fiber plugs in the card bodies. In one embodiment, the plastic from the plastic welding can be removed after lamination.

In one embodiment, the smart cards can be embossed after lamination. In some embodiments, a varnish can be added to both surfaces of the smart card after assembly. The varnish can prevent scratching. In one embodiment, the vamish can replace one or more of the layers of the smart card for a thinner card. According to some embodiments, the varnish can obscure components or any edges or outlines in the smart card. For example, the varnish can obscure totally or partially the main cavity in the card body where the carbon fiber plug is placed. After the sheet of smart cards has been assembled and laminated, the individual assembled smart cards can be separated from the sheet in the singulation process. Each smart card can include a card body, wherein the card body includes the carbon fiber plug and an antenna. The arrangement of the carbon fiber plug and the antenna can be according to any of the embodiments described herein in order to tune the weight, the mechanical feature and robustness of the smart card, while limiting the smart card users to be in contact with carbon fiber particles, and maintaining a smart card that is configured for contactless card reading (and eventually contact-based card reading).

While this specification contains many specific implementation details, these should not be construed as limitations on the scope of what may be claimed, but rather as descriptions of features that may be specific to particular embodiments.

Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. Moreover, the separation of various system modules and components in the embodiments described above should not be understood as requiring such separation in all embodiments, and it should be understood that the described program components and systems can generally be integrated together in a single component or packaged into multiple components.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous. Obviously, numerous modifications and variations are possible in light of the above teachings. It is therefore to be understood that within the scope of the appended claims, embodiments of the present disclosure may be practiced otherwise than as specifically described herein.

Embodiments of the present disclosure may also be as set forth in the following.
Embodiment 1 is an inlay layer of a smart card, comprising a card body, the card body defining at least one main cavity, each main cavity of the at least one main cavity having a continuous surface defined by an inner surface of the card body; a carbon fiber plug, the carbon fiber plug being housed inside the at least one main cavity; and an antenna, the antenna being housed inside the at least one main cavity.
Embodiment 2 is the inlay layer of embodiment 1, wherein the card body is composed of a metal or a polymer.
Embodiment 3 is the inlay layer of any embodiment 1 to 2, wherein the continuous surface of the at least one main cavity is discontinuous with an edge of the card body.
Embodiment 4 is the inlay layer of embodiment 3, wherein the continuous surface of the at least one main cavity and the edges of the card body are distanced of minimum 0.5 mm.
Embodiment 5 is the inlay layer of any embodiment 1 to 4, wherein the carbon fiber plug defines an additional cavity in the carbon fiber plug.
Embodiment 6 is the inlay layer of embodiment 5 wherein the antenna is fully or partially housed by the additional cavity in the carbon fiber plug.
Embodiment 7 is the inlay layer of any embodiment 5 to 6, wherein the additional cavity in the carbon fiber plug extends through the top and bottom outer surfaces of the carbon fiber plug. Embodiment 8 is the inlay layer of any embodiment 1 to 7, wherein the at least one main cavity is a first main cavity and a second main cavity, and wherein the first main cavity and the second main cavity are disjoints.
Embodiment 9 is the inlay layer of embodiment 8, wherein the carbon fiber plug is disposed, housed, inside the first main cavity and the antenna is disposed, housed, inside the second main cavity.
Embodiment 10 is a smart card, comprising an inlay layer of any embodiment 1 to 9, and a monomer or polymer layer disposed on an outer surface of the inlay layer, wherein the monomer or polymer layer is in contact with an outer surface of the carbon fiber plug.
Embodiment 11 is a method for manufacturing a smart card inlay, the method comprising forming a card body of a metal or a polymer; forming at least one main cavity in the card body, each main cavity of the at least one main cavity having a continuous surface defined by an inner surface of the card body; forming a carbon fiber plug of carbon fiber; depositing the carbon fiber plug in the at least one main cavity in the card body; and depositing an antenna in the at least one main cavity in the card body.
Embodiment 12 is the method of embodiment 11, further comprising forming an additional cavity in the carbon fiber plug.
Embodiment 13 is the method of embodiment 12, wherein the antenna is partially or fully deposited in the additional cavity in the carbon fiber plug.
Embodiment 14 is the method of any embodiment 11 to 13, wherein the at least one main cavity is a first main cavity and a second main cavity, wherein the first main cavity and the second main cavity are disjoints, and wherein the carbon fiber plug is deposited in the first main cavity and the antenna is deposited in the second main cavity.
Embodiment 15 is the method of any embodiment 11 to 14, wherein the continuous surface of the at least one main cavity is discontinuous with an edge of the card body.

Thus, the foregoing discussion discloses and describes merely exemplary embodiments of the present disclosure. As will be understood by those skilled in the art, the present disclosure may be embodied in other specific forms without departing from the spirit thereof. Accordingly, the disclosure of the present disclosure is intended to be illustrative, but not limiting of the scope of the disclosure, as well as other claims. The disclosure, including any readily discemible variants of the teachings herein, defines, in part, the scope of the foregoing claim terminology such that no inventive subject matter is dedicated to the public.

## Claims

1. An inlay layer of a smart card, comprising:
- a card body (100,200,300,610,710), the card body defining at least one main cavity, each main cavity (511,521,531,532) of the at least one main cavity having a continuous surface defined by an inner surface of the card body;
- a carbon fiber plug (110,210,310), the carbon fiber plug being housed inside the at least one main cavity; and
- an antenna (120,220,320), the antenna being housed inside the at least one main cavity.

2. The inlay layer according to claim 1, wherein the card body is composed of a metal or a polymer.

3. The inlay layer according to any one of claims 1 to 2, wherein the continuous surface of the at least one main cavity is discontinuous with an edge of the card body.

4. The inlay layer according to claim 3, wherein the continuous surface of the at least one main cavity and the edges of the card body are distanced of minimum 0.5 mm.

5. The inlay layer according to any one of claim 1 to 4, wherein the carbon fiber plug defines an additional cavity in the carbon fiber plug.

6. The inlay layer according to claim 5, wherein the antenna is fully or partially housed by the additional cavity in the carbon fiber plug.

7. The inlay layer according to any one of claim 5 to 6, wherein the additional cavity in the carbon fiber plug extends through the top and bottom outer surfaces of the carbon fiber plug.

8. The inlay layer according to any one of claim 1 to 7, wherein the at least one main cavity is a first main cavity and a second main cavity, wherein the first main cavity and the second main cavity are disjoints, and wherein the carbon fiber plug (320) is housed inside the first main cavity and the antenna (320) is housed inside the second main cavity.

9. A smart card, comprising:
- an inlay layer according to any one of 1 to 8; and
- a monomer or polymer layer disposed on an outer surface of the inlay layer, wherein the monomer or polymer layer is in contact with an outer surface of the carbon fiber plug.

10. A method for manufacturing a smart card inlay, the method comprising:
- forming a card body of a metal or a polymer;
- forming at least one main cavity in the card body, each main cavity of the at least one main cavity having a continuous surface defined by an inner surface of the card body;
- forming a carbon fiber plug of carbon fiber;
- depositing the carbon fiber plug in the at least one main cavity in the card body; and
- depositing an antenna in the at least one main cavity in the card body.

11. The method according to claim 10, further comprising forming an additional cavity in the carbon fiber plug, wherein the antenna is partially or fully housed in the additional cavity in the carbon fiber plug.

12. The method according to any one of claim 10 to 11, wherein the at least one main cavity is a first main cavity and a second main cavity, wherein the first main cavity and the second main cavity are disjoints, and wherein the carbon fiber plug is deposited in the first main cavity and the antenna is deposited in the second main cavity.
